# EUROPEAN PATENT APPLICATION

(11) **EP 1 615 281 A1**
(43) Date of publication of application: **11.01.2006**
(21) Application number: 04257572.0
(22) Date of filing: 06.12.2004
(51) Int. Cl.: H01M 8/02

(54) **Carbon composite separator for fuel cell**

(30) Priority: 18.06.2004 KR 2004045540
(71) Applicant: Hankook Tire Co., Ltd., Gangnam-gu, Seoul 135-723 (KR)
(72) Inventor: Kim, Jeong Heon c/o 811-1201, Yeolmae Maeul Apt., Daejeon 305-325 (KR)
(74) Representative: Haley, Stephen

(57) **Abstract**

Disclosed herein is a carbon composite separator for a fuel cell. The carbon composite separator comprises a separator body, and a partition plate made of a highly conductive and gas-impermeable material and embedded in the separator body. The carbon composite separator can completely prevent an increase in gas permeability caused by improper raw materials or unsuitably selected production processes of a carbon composite material, or various defects contained within the separator body.

## Description

The present invention relates to a carbon composite separator for a fuel cell, and more particularly to a carbon composite separator for a fuel cell comprising a separator body and a partition plate embedded in the separator body wherein the partition plate is made of a highly conductive and gas-impermeable material and is embedded upon molding the separator body, thereby completely preventing an increase in gas permeability caused by improper raw materials or unsuitably selected production processes of a carbon composite material, or various defects contained in the separator body.

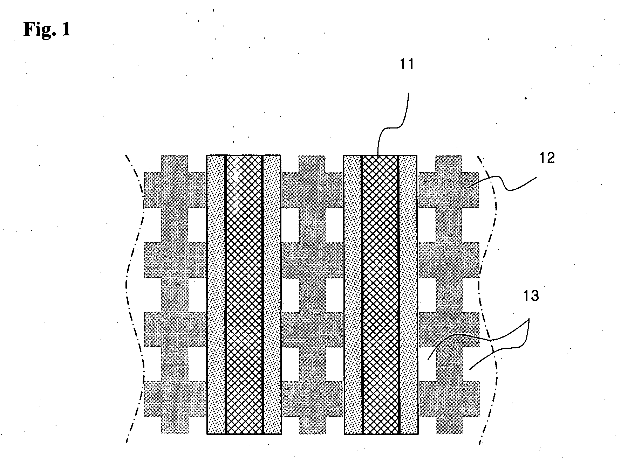

A fuel cell stack is the most significant element in a fuel cell system, and consists of a membrane electrode assembly denoted by numeral 11 and a separator denoted by numeral 12, as shown in Fig. 1. The separator 12, which is also called a "bipolar plate", functions as a current collector collecting electrons generated from the membrane electrode assembly 11, and at the same time, as a flow passage for hydrogen and oxygen, which are reaction gases of a fuel cell. Hydrogen and oxygen flow through a plurality of flow channels disposed at both sides of the separator 12. The reaction gases react with a catalytic layer of the membrane electrode assembly to generate electricity.

In order for the separator to have superior performance as a flow passage for the reaction gases, the gas permeability of the separator should be as low as possible.

A separator made of a carbon composite material can function as a good separator only when it has a gas permeability of about 1 x 10⁻⁵ cm³/cm²/sec. or less. However, if the carbon composite material is formed of improper raw materials or its production processes are unsuitably selected, the separator has a high gas permeability, thereby greatly damaging the operation efficiency of a stack.

If the separator contains defects, such as pores, shrinkages or holes, the gas permeability excessively increases. This increase causes the problems of a fire in the fuel cell stack and serious damage to a membrane electrode assembly.

In view of the above-mentioned problems caused by an increase in gas permeability, some attempts have been directed toward separators designed to have a considerably large thickness, but they unnecessarily increase the weight and volume of the stacks.

Therefore, it is an object of the present invention to provide a carbon composite separator for a fuel cell comprising a separator body and a partition plate embedded in the separator body wherein the partition plate is made of a highly conductive and gas-impermeable material and is embedded upon molding the separator body, thereby completely preventing an increase in gas permeability caused by improper raw materials or unsuitably selected production processes of a carbon composite material, or various defects contained in the separator body.

The carbon composite separator for a fuel cell according to the present invention is characterized in that the partition plate is made of a highly conductive and gas-impermeable material and is embedded upon molding the separator body such that gas permeation through the separator is reduced or completely prevented.

Examples of highly conductive and gas-impermeable materials for the partition plate include metals and alloys thereof. The partition plate is preferably made of aluminum, copper, iron, titanium, lead, zinc, tin, or an alloy thereof.

The thickness of the partition plate made of the highly conductive and gas-impermeable material is preferably in the range of 0.001mm to 2mm.

### In the Drawings;

The above and other objects, features and other advantages of the present invention will be more clearly understood from the following detailed description taken in conjunction with the accompanying drawings, in which:
Fig. 1 is a schematic cross-sectional view of a common fuel cell stack;
Fig. 2 is a cross-sectional view of a conventional carbon composite separator for a fuel cell; and
Fig. 3 is a cross-sectional view of a carbon composite separator for a fuel cell according to the present invention.

The present invention will now be described in more detail with reference to the accompanying drawings.

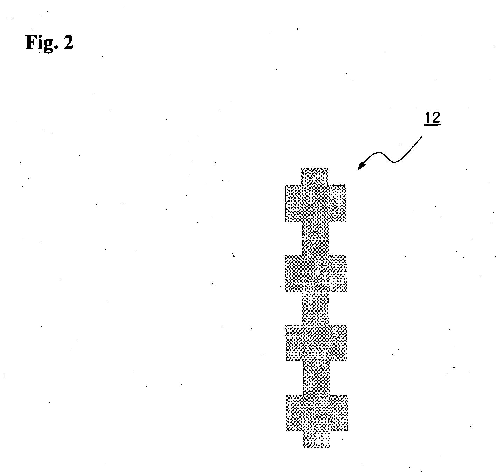

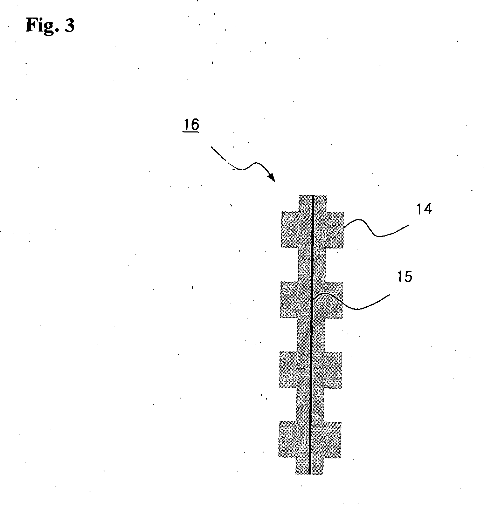

Unlike the conventional separator 12 shown in Fig. 2, a carbon composite separator 16 for a fuel cell according to the present invention comprises a separator body 14 and a partition plate 15 made of a highly conductive and gas-impermeable material and embedded in the separator body 14, as shown in Fig. 3. Since the partition plate 15 is embedded in the separator body upon molding, the gas permeability can be reduced and the above-mentioned problems of the prior art can be overcome.

In general, carbon composite separator is produced by mixing a graphite powder as a conductive additive and a polymeric material for fixing and shaping the graphite powder, feeding the mixture into a mold designed to impart a predetermined shape to the separator, and molding the fed mixture. At this time, the molding is performed by compression molding and injection molding. During molding, the polymeric material is cured under proper heat and pressure such that the separator has a desired shape.

As shown in Fig. 3, the highly air-tight and lightweight separator 16 for a fuel cell in which the partition plate 15 is embedded is produced by disposing the partition plate 15 in the center of the separator body 14 upon feeding a material for the separator body 14 into a mold for compression or injection molding, and curing the material to have a desired shape.

The partition plate 15 disposed in the center of the separator body 14 having a highly conductivity and a gas-impermeability can be made metal or an alloy thereof. Specific examples of materials for the partition plate 15 include aluminum, copper, iron, titanium, zinc, tin, and alloys thereof. The thickness of the partition plate 15 is preferably between 0.001mm and 2mm.

The materials and thickness of the partition plate 15 may be properly selected in accordance with the intended effects. For example, in case where prevention of gas permeation is required, a thin metal plate can be used as the partition plate 15. On the other hand, in case where thin and light separator by enhancing strength of entire separator is required, a strong and thick plate can be selected for the partition plate 15.

Since a fuel cell stack is operated under high temperature and acidic condition, exposure of the metal partition plate 15 to the outside of the separator body 14 should be avoided. This is because metal ions eluted during the operation of the fuel cell stack may quickly deteriorate the performance of a catalyst and an ion-conductive membrane constituting a membrane electrode assembly.

Meanwhile, the surface of the partition plate 15 should be protected from corrosion, oxidation, and contamination before use. The reason is that the damaged surface of partition plate may lower the electrical conductivity and bonding strength at the interface between the carbon composite material and the partition plate material, thus causing adverse effects.

The following examples are present to illustrate in detail the invention and are not to be constructed as limitation thereof.

### EXAMPLE 1 AND COMPARATIVE EXAMPLE 1

A carbon composite separator of Comparative Example 1, and a carbon composite separator of the present invention (Example 1) in which a 1mm thick brass plate was embedded were produced so as to have a thickness of 4mm by compression molding. The two separators were then subjected to electrical conductivity, tensile strength and gas permeability, respectively.

As the brass plate, an alloy containing 33wt% of strip type zinc in copper was used.

**Table 1**

| Properties | Comparative Example 1 | Example 1 |
|---|---|---|
| Electrical conductivity (S/cm, in-plane) | 94 | 97 |
| Tensile strength (MPa) | 30 | 110 |
| Gas permeability (cm³/cm²/sec, at room temperature) | 1 x 10⁻⁶ | 0 |

As can be seen from the data shown in Table 1, the gas permeability through the separator (Example 1) of the present invention was low enough to be undetectable. This result confirms that the separator of the present invention can completely prevent gases from permeating the separator, as mainly intended in the present invention.

The electrical conductivity of the separator (Example 1) according to the present invention was similar to that of the separator of Comparative Example 1 within the error range. This indicates that the embedment of the conductive plate in the separator has little or no significant effect on the in-plane conductivity of the separator according to the present invention.

Although not shown in Table 1, since the metal plate is absolutely advantageous in terms of electrical conductivity, it is assumed that better result will be obtained for through-plane conductivity.

As demonstrated above, since the separator of the present invention can completely prevent gas permeation through the separator, an unnecessary increase in thickness for the purpose of previously preventing gas permeation can be avoided.

As shown in Table 1, since the plate embedded in the separator of the present invention has a high strength and acts as a skeleton of the separator, the strength of the whole structure of the separator according to the present invention increases. This increase in strength enables the production of a separator having a small thickness relative to the same strength when compared to conventional separators. Another advantage of the separator according to the present invention is that occurrence of cracks and damage caused by a sudden increase in load during the fabrication or use of a stack can be prevented.

Moreover, since the metal plate can completely prevent gas permeation, a lightweight and porous separator can be produced by using a highly porous carbon composite material.

As apparent from the above description, the carbon composite separator for a fuel cell of the present invention comprises a separator body and a partition plate made of a highly conductive and gas-impermeable material and embedded in the separator body. Accordingly, the separator of the present invention can completely prevent an increase in gas permeability caused by improper raw materials or unsuitably selected production processes of a carbon composite material, or various defects contained within the separator body.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A carbon composite separator for a fuel cell, comprising:
a separator body; and
a partition plate embedded in the separator body
wherein the partition plate is made of a highly conductive and gas-impermeable material such that gas permeation through the separator is reduced or completely prevented.

2. The carbon composite separator according to claim 1, wherein said highly conductive and gas-impermeable material is a metal selected from aluminum, copper, iron, titanium, lead, zinc, tin, and alloys thereof.

3. The carbon composite separator according to claim 1 or 2, wherein said highly conductive and gas-impermeable material has a thickness between 0.001mm and 2mm.
